# EUROPEAN PATENT APPLICATION

(11) **EP 1 543 995 A1**
(43) Date of publication of application: **22.06.2005**
(21) Application number: 03029126.4
(22) Date of filing: 18.12.2003
(51) Int. Cl.: B60B 5/02, B29C 39/10, B29C 39/42, B29C 33/38

(54) **Method for making plastic products and product made by such a method**

(71) Applicant: Ford Global Technologies, LLC, Dearborn, MI 48126 (US)
(72) Inventor: Persson Fredrik, SE-442 90 Kungälv (SE)
(74) Representative: Mossmark, Anders

(57) **Abstract**

The invention relates to a moulded prototype product and a method for making such a moulded product, comprising the steps of:
- providing a mould having at least a first mould section (9) and a second mould section (10) and at least one reinforcing insert (13), making up an attachment point for the product;
- assembling the mould sections into a mould assembly, which defines a mould cavity having the shape of the product to be moulded;
- placing the mould assembly in a vacuum casting machine (15);
- evacuating air from the vacuum casting machine (15);
- mixing a curable plastic material in liquid form in said vacuum casting machine;
- moulding the mixed plastic material in said mould cavity in liquid form
- removing the mould assembly (14) from the vacuum casting machine
- curing the pastic material in said mould cavity, and;
- removing the cured moulded product from the mould assembly (14).

## Description

### TECHNICAL FIELD

This invention relates to a method for making plastic products and products made by said method, in particular prototype products manufactured in short series for display and/or testing purposes.

### BACKGROUND ART

Manufacturing prototype or early production models of a product for display and or testing purposes is usually a very costly and time consuming process. Such products are as a rule manufactured in relatively small series, or even as a one off, making them unsuitable for conventional manufacturing methods.

There are several rapid prototyping methods and devices suitable for making prototypes of this type, but the resulting products may not have the desired mechanical or material properties to allow them to be tested or used as desired.

One example of such products is automotive vehicle rims with three-dimensional deeply contoured ornamental discs or bodies. In production such rims are usually produced by deep drawing a flat steel plate to a desired profile. This profile is usually so deep that the wheel disc must be formed in several stages or press operations and it is sometimes necessary to anneal a disc between some of the drawing stages. Such severe drawing operations are also accompanied by relatively short die and tooling life. For these reasons, the deep drawing of ornamental wheel discs for prototyping purposes is a very expensive process. This is also true for the manufacture of alloy wheels, using aluminium or a similar relatively light metal. The tooling cost for making a mould for a short series of rims would be prohibitive.

Today prototype alloy wheel rims for testing and display are commonly milled from a solid aluminium block. The manufacture of a set of rims still costly, although more reasonable than the above methods. It is also time consuming, as a set of four rims may take about ten weeks to complete, as each rim must be manufactured from scratch. This is a problem if one rims breaks during testing, as a replacement may not be immediately available. The resulting wheel rims will have material properties substantially equal to the production wheel rims, but are likely to be heavier as the design has not been optimized for casting.

It is a purpose of the invention to provide a method for manufacturing prototype products and a prototype product, preferably, but not necessarily, manufactured by said inventive method, which product can be used for both display as well as for mechanical and functional testing purposes. By using said method the problems related to lead time from design to a finished prototype may be reduced significantly. The unit cost is also lower, when compared to the methods used in background art.

### DISCLOSURE OF INVENTION

It is therefore an object of the present invention to provide a prototype product and a method that solves the above problems. This is achieved by a product according to claim 1, and a method for making a moulded product, according to claim 7.

According to a preferred embodiment, the invention relates to a method for making a moulded product, comprising the steps of:
- providing a mould having a least a first mould section, a second mould section and at least on reinforcing insert, making up an attachment point for the product;
- assembling the mould sections into a mould assembly, which defines a mould cavity having the shape of the product to be moulded;
- placing the mould assembly in a vacuum casting machine;
- mixing at least two components of a curable plastic material in liquid form in said vacuum casting machine;
- moulding the mixed plastic material in said mould cavity in liquid form
- removing the mould assembly from the vacuum casting machine
- curing the plastic material in said mould cavity, and;
- removing the cured moulded product from the mould assembly.

The mould may be provided by covering a master model having the shape and dimensions of the product with a suitable material, for instance silicone. The master model can be machined from a dimensionally stable block material, such as a ureol plastic material made by Cibatool ®. The master model is machined to a dimensionally exact copy of the product and is given a surface treatment to produce a surface finish equal to that of a finished product. The latter operation may entail filling in any remaining surface defects and/or painting the master model.

When the silicone covering the master model has solidified it may be cut away from the master model and used to make a mould comprising at least two mould sections. The number of sections can be proportional to the degree of complexity of the design, undercuts and surface details of the finished product. At this stage, reinforcing inserts are positioned in the mould to strengthen local areas, which inserts form attachment means for co-operation with a corresponding securing means. Guide pins for facilitating re-assembly of the mould sections, or other additional guides, may be used for positioning the inserts in the mould cavity enclosed by the mould. The inserts can me made from materials having a higher strength than the plastic material making up the major part of the finished product or prototype. Examples of such materials may be a metallic material, such as steel, titanium or aluminium.

The mould sections are then assembled into a mould assembly and placed into the vacuum casting machine. The machine is provided with separate containers for at least two components and means for mixing said at least two components under vacuum conditions. The mixture containing the above components should be in a liquid form, allowing it to be poured into the mould assembly. By subjecting the component materials to vacuum before they are mixed until the mixture has been poured into the mould, any air or gases dissolved in these materials are extracted. This increases the strength of the moulded product, as it is free from gas bubbles and porous areas.

According to one embodiment of the invention the two components may comprise a resin material and a hardener. One example of a suitable material for this purpose is a prepolymer material and hardener comprising a two component polyurethane.

According to a further embodiment of the invention the two components may comprise a prepolymer material, a hardener and a reinforcing material. It is possible to mix all components at one time, or to mix said prepolymer material with a pre-mixed material comprising a hardener and a reinforcing material.

The reinforcing material may be in fibrous or particulate form. Examples of suitable fibrous materials are glass and carbon fibres. The fibres are preferably short, such as ground fibres, with a length not exceeding 3 mm.

Once the curable resin material has been filled into the mould, the casting machine may be pressurized. The mould can then be removed from the vacuum casting machine to allow the resin material in the filled mould to be cured. This is preferably, but not necessarily, achieved by placing it in an oven and heating the mould for a predetermined period of time.

Alternatively the vacuum casting machine contains a container provided with a heating element. The container may be filled with a granulate material made of polyamide or a similar plastic material, with or without reinforcing fibres. In this case the heating element melts the granulate material under vacuum conditions, whereby the molten plastic is poured into the mould. As the molten plastic fills up the mould, the relatively low temperature of the walls of the mould will cause the molten plastic to solidify and to cure. The mould can then be taken out of the vacuum casting machine and the product can be removed from the mould without requiring further curing or heating. The mould itself may be reused for another 10-20 prototype products.

The moulded product is preferably made by either of the above processes, but can also be made by other suitable moulding processes. Before use or testing the product, can be subjected to a final finishing process and may also be painted, if so desired.

One example of an apparatus for making a moulded product using the above method comprises a vacuum casting machine having at least two chambers and means, such as a pump or a source of vacuum, for creating a vacuum in said chambers. The apparatus may further be provided with a first chamber is provided with at least two containers for at least two components of a curable plastic material to be mixed before casting, a mixing means for mixing said materials before casting and a second chamber in which is placed a mould containing a mould cavity for receiving the mixed materials from the mixing means.

The first chamber may contain a first container for a resin material and a second container for a hardener. Alternatively, the second container may contain a mixture comprising a hardener and a reinforcing material. One of the first or the second container is provided a mixing device. The contents of the other container are poured into the container provided with the mixing device, wherein predetermined amounts of resin and hardener are mixed before moulding. Alternatively the first container and the second container are both connected to a further container in a separate mixing unit, wherein predetermined amounts of resin and hardener are mixed before moulding. In both cases the mixing operation occurs under vacuum conditions.

The above method may use such an apparatus for producing a wide range of products, in particular products having a complex geometry. One field where this is applicable is the automotive industry, where it is often desired to make pre-production prototypes of interior and exterior parts requiring a relatively high strength. Examples of such part may be wheel rims, advanced suspension parts, interior trim. A further example may include cast speaker components such as chassis, domes and horns. By providing local inserts of a material with higher strength where higher loads are placed on the product the overall strength of the product can be increased. Examples of such reinforcing inserts are metal sleeves for wheel screws in wheel rims and local reinforcements at or near attachment point for other automotive components.

The above method allows prototypes to be manufactured and tested to a greater extent than what would otherwise be possible. This is due to the fact that the finished product can be given a higher strength than a conventional rapid prototype product, and yet be produced with a shorter lead time and at a lower cost than, for instance, machining a prototype from the material to be used in an actual product.

### BRIEF DESCRIPTION OF DRAWINGS

In the following text, the invention will be described in detail with reference to the attached drawings. These drawings are not drawn to scale, but are used for illustration only and do not in any way limit the scope of the invention. In the drawings:

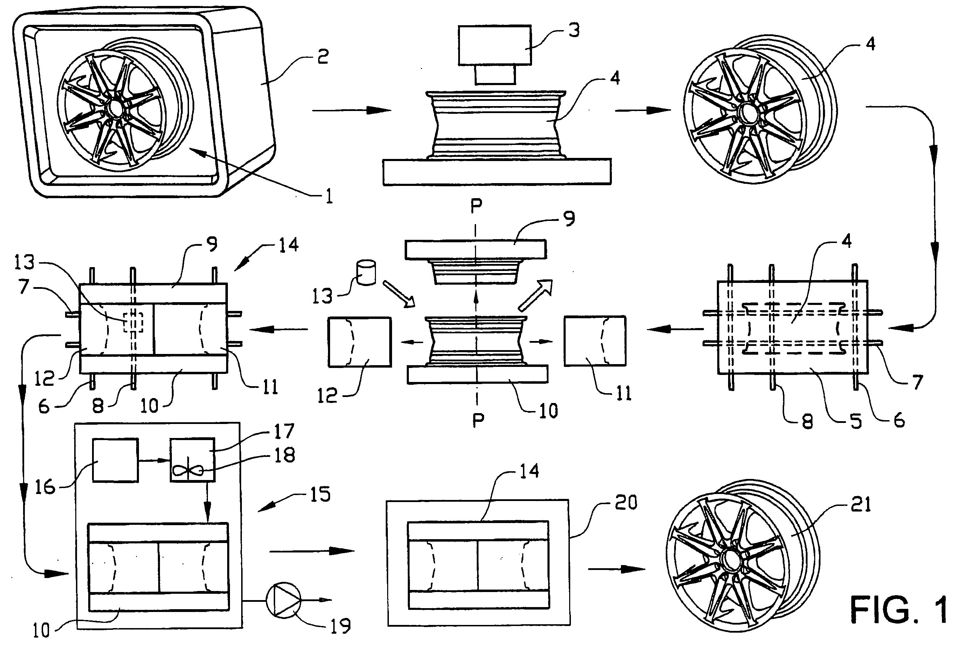

- Figure 1: shows a schematic flow chart for the method according to the invention.

### MODES FOR CARRYING OUT THE INVENTION

Figure 1 shows a schematic flow chart for making a vehicle wheel rim using the method according to the invention. A vehicle wheel rim is first designed by means of a computer aided design (CAD) program. The digital data representing the virtual CAD model 1 is transferred from a computer 2 to a numerically controlled (NC) machine 3, for the manufacture of a master model 4 to be used in the casting process. The master model can be machined from a dimensionally stable block material, such as a ureol plastic material made by Cibatool @.The master model 4 is machined to a dimensionally exact copy of the wheel rim and is given a surface treatment to produce a surface finish equal to that of a finished wheel rim. The latter operation entails filling in any remaining surface defects and painting the master model. To make a mould 5 the master model, having the shape and dimensions of the wheel rim, is covered with a plastic resin, such as a silicone resin. The mould is also provided with a number of guide pins 6, which are used for facilitating re-assembly of the mould when the master model 4 has been removed. In this example 20 guide pins made from steel rods having a diameter of 8-10 mm were used. One set of guide pins are positioned around the outer periphery of the wheel rim, parallel to the rotational axis P of the wheel rim, through the entire mould. These pins will position and hold the upper and lower mould sections 9, 10 together during the moulding process. The upper and lower mould sections define the ornamental front and the rear of the wheel rim respectively. The mould sections are separated from a central part of the mould by upper and lower parting lines in a first and a second plane , which planes are at right angles to the rotational axis of the wheel rim and positioned adjacent the respective circumferential edges of the wheel rim. A further set of guide pins 7 are positioned at right angles to said axis and to a third plane defining a parting line between two mould sections 11, 12 enclosing the circular sections of the wheel rim. These pins will position and hold the two part-cylindrical mould sections 11, 12 together during the moulding process. In addition, a number of guide pins 8 (only one indicated) are positioned axially through the mould in the exact locations of each of the wheel screws to be used for attaching the wheel rim to a vehicle. Each of the latter guide pins 8 are used to locate and hold a sleeve 13 that is moulded into the wheel rim. The sleeves 13 can be made from steel, aluminium or a similar material and have a knurled outer surface, for increasing the adhesion to the moulded rim, and a conical inner surface for co-operation with a wheel screw. (not shown). This arrangement reduces the tension in the material in the area surrounding the wheel screw when the wheel rim is mounted.

When the silicone covering the master model has been cured it may be cut away from the master model to make a mould comprising the above mould sections 9, 10, 11, 12. When cutting the sections apart, the cut is preferably, but not necessarily, made slightly wavy. When re-assembling the mould section, the combination of the guide pins and the mating wave-cut surfaces will ensure that the sections are positioned correctly. In the figure indication the separated section, the guide pins 6, 7, 8 have been removed for clarity.

The number of sections can be proportional to the degree of complexity of the design, undercuts and surface details of the finished product.

The mould sections are then assembled into a mould assembly 14 and placed into a vacuum casting machine 15. The machine is provided with separate containers 16, 17 for at least two components and means 18 for mixing said at least two components under vacuum conditions. In the current example, the containers can each hold 3-4 litres.

In a first embodiment of the present invention, the composition which is used for moulding the wheel rim comprises a pre-polymer, a curative or hardener, a reinforcing fibre material and an optional antioxidant. The process first entails placing a prepolymer of polyurethane in liquid form in the first container 16. The fibre material is then added to a hardener in liquid form and placed in the second container 17. The containers 16, 17 and the mould assembly 14 are then placed in the vacuum casting machine 15 and connected by suitable means to enable the plastic material to be poured into the mould. Once the air is evacuated and a vacuum has been established in the casting machine 15, the ingredients in the second container 17 are thoroughly mixed to form a first mixture. The prepolymer of polyurethane in the first container 16 is then added to the hardener in the second container 17 and is thoroughly mixed to form a homogeneous second mixture.

In the current example the polyurethane used was a transparent ureol polymer sold under the name SG95, made by MCP Heck ©, mixed to the ratio 100/150 of prepolymer and curative, respectively. The fibre used was ground glass fibres with a fibre length not exceeding 3 mm, making up 15% by weight of the mixture containing both components.

Alternative fibres that may be used to reinforce the material includes flocked carbon fibres, having the same fibre length.

The vacuum is achieved by means of a pump 19, or another source of low pressure. The mixture containing the above components should be in a liquid form, allowing it to be poured into the mould assembly. By subjecting the component materials to vacuum for a predetermined period of time before they are mixed any air, other gases or humidity dissolved in these materials or present in the ambient air are extracted. In the current example this period of time is set at about 10 minutes. This deaeration and dehumidification increases the strength of the moulded product, as it is free from gas bubbles and porous areas.

After the polyurethane elastomeric composition is prepared, the said second mixture is poured from the second container 17 into the mould assembly 14. Once the mould cavity is filled and atmospheric pressure has been restored, the mould assembly is transferred to an oven 20 where the polyurethane elastomer is cured at a temperature of 70 °C for a period of 45 minutes.

In one alternate embodiment, an anti-oxidant and/or a hindered amine light stabilizer and/or an ultraviolet absorber are optionally added to the curative, or hardener. These chemical formulations assist in preventing deterioration of the finished product as a result of exposure to radiation from the sun and exposure to the atmosphere.

Depending on the starting materials, at least one of the above containers may be provided with heating means for melting the prepolymer material and/or the hardener. For this type of materials, it may be necessary to preheat the mould assembly to prevent uneven solidification of the polyurethane elastomeric composition.

According to an alternative embodiment, the polyurethane elastomeric composition is fed into an injection manifold, where one or more of tubes lead from the injection manifold to corresponding injection ports in the mould assembly. The polyurethane elastomeric composition is then injected into the mould assembly. Depending on the starting materials, the low pressure may be released and the mould assembly removed, as described above, or the low pressure may be maintained until the polyurethane is cured.

The polyurethane elastomer is typically cured by exposure to a preselected, elevated temperature for a predetermined period of time. However, certain polyurethane formulations that may be used in the current invention do not require elevated temperature exposure, as they air cure at ambient, or room temperature.

In a second embodiment of the present invention only one of the said containers in the vacuum casting machine is used, preferably the second container provided with a mixing means. the composition used is a polyamide granulate and an optional anti-oxidant. The composition is placed in, for instance, the second container and heated by a heating element (not shown) until melting occurs. The casting machine is connected to a source of vacuum and the composition is thoroughly mixed to form a homogenous liquid material. The molten composition is then poured from the second container into a preheated mould assembly. Once atmospheric pressure has been restored, the mould assembly is allowed to cool whereby the composition is simultaneously cured.

The finished product comprises a polyurethane or polyamide with added reinforcing fibres or particles, with local inner and/or outer structural reinforcements. Compared to a conventional method of prototyping rims, by milling each rim from a block of aluminium, the weight is reduced by approximately half and the cost by about 90 % per unit for a set of four rims.

Although made from a plastic material, such a wheel rim can be mounted on a vehicle and has sufficient strength to allow the vehicle to be driven. The wheel rims can not only be displayed, but also tested under actual driving conditions.

A set of wheel rims manufactured using the above method and apparatus was put through a test. The test cycle included 7 cycles, each comprising:
- 5 laps on a track for testing comfort at varying speeds, including a so-called "washboard" at 30 km/h and a simulated well cover at 50 km/h.
- 10 stop-and-go cycles from 0 to 30 to 0 km/h at a 0,45 g deceleration when braking. The braking test is performed both straight ahead and in left/right-hand curves.

Following these cycles, a final test included braking from 40 km/h using maximum braking force, two laps in a figure eight at 30 km/h, and a final lap on a life cycle track including running over a kerbstone at an angle. The total distance driven was 88 km. An ocular inspection showed no visible damage to the wheel rims.

The invention is not limited to the embodiments described above and may be varied freely within the scope of the appended claims.

## Claims

1. A prototype product, moulded from a fibre reinforced plastic material, **characterized in that** the product comprises at least one reinforcing insert (13), wherein each insert provides an attachment means for co-operation with a corresponding securing means.

2. The prototype product according to claim 1, **characterized in that** the product is a vehicle wheel rim (21).

3. The prototype product according to claim 2, **characterized in that** the at least one insert is a reinforcing sleeve (13) for co-operation with a corresponding number of wheel screws.

4. The prototype product according to claim 3, **characterized in that** the at least one sleeve is made from a metallic material.

5. The prototype product according to claim 1, **characterized in that** the product is moulded from polyurethane.

6. The prototype product according to claim 1, **characterized in that** the product is moulded from polyamide.

7. A method for making a moulded prototype product, comprising the steps of:
- providing a mould having a least a first mould section, a second mould section and at least on reinforcing insert, making up an attachment point for the product;
- assembling the mould sections into a mould assembly, which defines a mould cavity having the shape of the product to be moulded;
- placing the mould assembly in a vacuum casting machine;
- evacuating air from the vacuum casting machine;
- mixing a curable plastic material in liquid form in said vacuum casting machine;
- moulding the mixed plastic material in said mould cavity in liquid form
- removing the mould assembly from the vacuum casting machine
- curing the plastic material in said mould cavity, and;
- removing the cured moulded product from the mould assembly.

8. The method according to claim 7, **characterized by** providing the mould by covering a master model having the shape and dimensions of the product with a plastic resin.

9. The method according to claim 8, **characterized by** cutting the plastic resin from the master model to make a mould comprising at least two mould sections.

10. The method according to claim 8, **characterized by** providing the mould by machining the master model from a block material and treating surface of the master model to produce the surface finish of a finished product.

11. The method according to claim 7, **characterized by** mixing said at least two components comprising a resin material, a hardener and a reinforcing material.

12. The method according to claim 11, **characterized by** pre-mixing the hardener and ground glass fibres.

13. The method according to claim 7, **characterized by** heating and mixing a plastic material comprising curable plastic material into a homogenous liquid.

14. The method according to claim 13, **characterized by** heating and mixing a plastic material comprising a polyamide granulate.

15. The method according to claim 7, **characterized by** curing the filled mould by placing it in an oven and heating the mould for a predetermined period of time.
